# EUROPEAN PATENT APPLICATION

(11) **EP 4 404 121 A1**
(43) Date of publication of application: **24.07.2024**
(21) Application number: 24152924.7
(22) Date of filing: 19.01.2024
(51) Int. Cl.: G06Q 10/087, A47J 36/32, G06Q 50/12

(54) **HOLDING PAN COMMUNICATION SYSTEM**

(30) Priority: 19.01.2023 US 202363480606 P; 17.01.2024 US 202418415403
(71) Applicant: Marmon Foodservice Technologies, Inc., Osseo, MN 55369 (US)
(72) Inventor: Greenberg, Jacob, Elgin, IL (US); Kestner, Kyle, Osseo, MN, 55369 (US); Tobler, Andy, Geneva, IL, 60134 (US); Bendig, James, Naperville, 60564 (US); Njaastad, David, Palatine, 60067 (US); Vegesna, Nagasuryarama, Osseo, MN, 55369 (US); Paton, David, Carol Stream, IL, 60188 (US)
(74) Representative: Slingsby Partners LLP

(57) **Abstract**

A food holding pan communication system includes a food holding pan (14) having a pan identifier (36) and configured to receive food items. A pan identification station (100) includes a pan receiving area (102), a pan identifier reader (104), and at least one sensor (314) directed at the pan receiving area and configured to acquire data regarding a food item received by the food holding pan. A processor (304) is communicatively connected to the at least one sensor (314) to receive signals from the at least one sensor. The processor is configured to determine a type of food item in the food holding pan.

## Description

### CROSS-REFERENCE TO RELATED APPLICATIONS

The present application claims priority of US Provisional Patent Application No. 63/480,606, filed on January 19, 2023 and US 18/415,403 filed 17 January 2024.

### BACKGROUND

The present disclosure relates to the field of restaurants or food preparation. More specifically, the present disclosure relates to a system for identification and monitoring of the contents within a food pan.

Various types of ovens or food warming units are used in the food industry. Such ovens and food warming apparatus allow precooked food items to be stored separately until needed. For instance, when a quick serve restaurant receives an order for a sandwich, the sandwich may be assembled on a food preparation table where the contents of certain sandwich items may be removed from food warming units. The storing of precooked food in food warming units enables quick assembly of the sandwich and efficient order fulfillment.

The conditions in which the cooked food is held play a significant role in the quality, palatability, and consumption safety of the precooked food. Inventory control of precooked food items can reduce the amount of precooked food held and the length of time that individual precooked food items are held. However, tighter inventory control requires more frequent cooking of smaller batches of food items.

Food storage, preparation, and holding require the food to be moved through a kitchen environment and to be treated by various devices within the kitchen. This may include a freezer or refrigerator, a griddle or deep fryer, and a holding bin. Even with the use of kitchen management systems to track food orders and inventory, manual inputs and operator knowledge of current food status and conditions are frequently relied upon to supplement the information reported in the kitchen management system. Manual control or override of unconnected kitchen devices can introduce error in quality control and inventory management operations. Therefore, increased tracking and knowledge of food item status, quality, and count within the kitchen is needed.

US Patent No. 7,132,926, discloses a smart tray system with a plurality of information tags and a plurality of communications devices which can communicate with each of the information tags when the information tags are located in the proximity of the communication devices. Each information tag is attached to a food tray and contains information about the food tray and the food product contained therein. The information tags and the communication devices provide for tracking and updating the information about the food product contained in the food trays.

US Patent No. 11,278,157, discloses a food holding tray and a system for holding prepared food items. The tray includes a shell that defines at least one food receiving area internal to the shell. A plurality of sensors are arranged about the shell and directed into the food receiving area. A processor is communicatively connected to the plurality of sensors to receive signals from the sensors. The processor calculates holding data from the signals received from the sensors.

US Patent No. 11,344,156, discloses a food holding system with a sensor disposed within or in connection to a food pan that is removably inserted within the food holding cavity of a food holding chamber. The sensor is configured to sense a characteristic of an interior environment of the food pan and communicate with the food holding chamber or the chamber base.

### BRIEF DISCLOSURE

The present disclosure relates to the field of restaurants or food preparation. More specifically, the present disclosure relates to a system for identification and monitoring of the contents within a food pan.

An example of a food holding pan communication system includes a food holding pan having a pan identifier and configured to receive food items. A pan identification station includes a pan receiving area, a pan identifier reader, and at least one sensor directed at the pan receiving area and configured to acquire data regarding a food item received by the food holding pan. A processor is communicatively connected to the at least one sensor to receive signals from the at least one sensor. The processor is configured to determine a type of food item in the food holding pan.

In examples of the food holding pan the pan identifier is a bar code or an RFID tag. A kitchen management system (KMS) is communicatively connected to the processor of the pan identification station. The KMS includes a database wherein an identification of the pan from the pan identifier reader is stored in association with the determined type of food item in the food holding pan.

Other examples of the food holding pan communication system, include a holding bin or a broiler. The holding bin may be communicatively connected to the KMS, and the holding bin informs the KMS of a status of each location in each compartment of the food holding bin. The KMS may operate to assign a location of the pan to the holding bin and communicate the assigned location to the holding bin. The holding bin may include at least one visual indicator in association with each location in each compartment of the holding bin, and the holding bin operates a visual indicator of the at least one visual indicator to identify the assigned location. The holding bin may include the pan identification station. The pan may be configured to be moved from the broiler to the pan identification station and from the pan identification station to the holding bin. The broiler may be configured to cook the food item and further include the pan identification station.

A processor of the identification station analyzes the data of the at least one sensor to determine the type of food items in the holding pan. The processor may analyze the data of the at least one sensor to determine a count of the food items in the holding pan. The at least one sensor may include a camera. The at least one sensor may additionally include at least one of a load cell, a radar, and an infra-red thermometer. The processor may analyze image data from the camera to determine a type of the food items in the holding pan and access a database of food item specifications for the type of food items in the holding pan. A load cell may measure a weight of the food items in the holding pan and the weight compared against a weight specification for the type of food items in the holding pan. The infra-red thermometer may be configured to measure a surface temperature of the food items, and the processor compares the surface temperature to a surface temperature specification for the type of food item in the holding pan. The measured surface temperature may be subsequently stored in a database in association with the pan identification. If the measured surface temperature is outside of the surface temperature specification, a visual indication to reject the pan of food items is produced. If the measured surface temperature is inside of the surface temperature specification, a location in holding bin is assigned to the holding pan.

A method of food holding pan communication includes a pan with food items received at a pan identification station. A pan identifier is read from the pan by the pan identification station. Sensor data is acquired from one or more sensors of the pan identification station directed at the pan. Food items in the pan are identified at least partially based upon the sensor data. A location in a holding bin is assigned to the pan. The food holding bin in automatedly operated to control for a predetermined environment at the location in the holding bin assigned to the pan.

In an additional example of the method a surface temperature of the food items in the pan is measured by the identification station. The surface temperature is compared against an acceptable temperature range. An alarm is produced if the surface temperature is below the acceptable temperature range.

### BRIEF DESCRIPTION OF THE DRAWINGS

Figure 1 is an environmental view of an example of a kitchen.
Figure 2 is a perspective view of an example of an identification system.

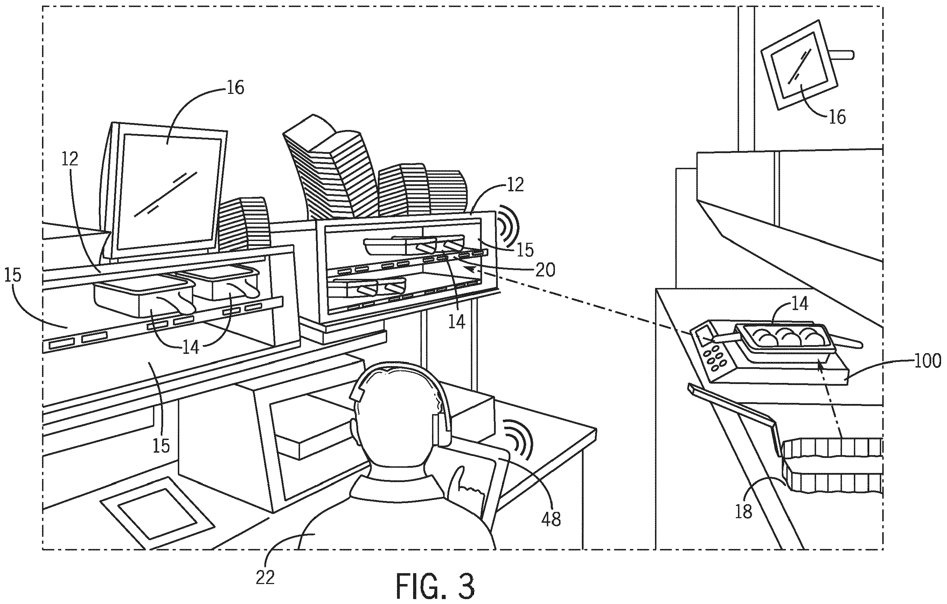

Figure 3 is a further environmental view of a kitchen.
Figure 4 is a further perspective view of an example of an identification system.
Figure 5 is a flow chart of an example of a method of tracking food inventory.
Figure 6 depicts an example of a holding bin.
Figure 7 depicts a further example of a holding bin.
Figure 8 is an example of an identification system integrated with a broiler.
Figure 9 is a system diagram of an extended identification system.

### DETAILED DISCLOSURE

Examples of food holding systems and methods are disclosed herein that provide improved tracking of a type and/or a number and/or quality conditions of precooked food items held within food pans. Food holding systems and methods use this inventory and/or environmental data to provide improved food holding bin environmental control device operation and control to prolong food quality, palatability, and safety. Still further exemplary embodiments may provide improved inventory management through coordination of custom orders, food cooking, held precooked food inventory, and customer order assembly instructions.

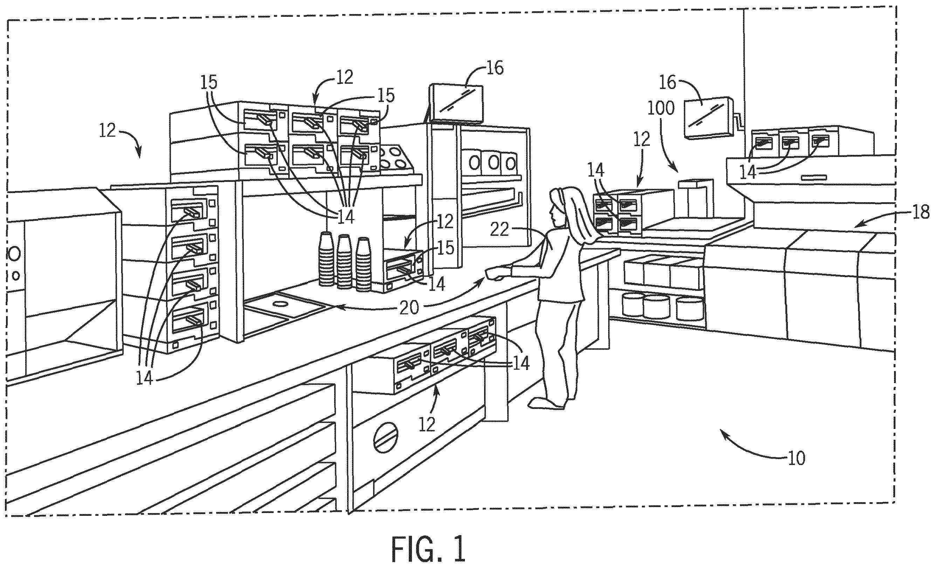

Figure 1 depicts an exemplary view of a kitchen 10, for example as found in a quick service restaurant. The kitchen 10 includes a variety of holding bins 12 positioned at one or more locations within the kitchen 10. The holding bins 12 each include one or more compartments 15. The compartments 15 are each configured to receive one or more pan 14. The holding bins 12 may be configured to receive pans 14 in a grid arrangement, for example but not limited to, 2x2, 2x4, or 3x4. The pans 14 are each configured to hold a plurality of cooked food products therein. The holding bin 12 includes heating elements and or other environmental control devices, for example, fans or humidifiers, in association with the compartments 15 which are operable to change the environment within the compartment 15. Interaction between the pan 14 and the holding bins 12 maintain an environment about the cooked food product within the pan 14 to prolong and preserve food quality, palatability, and safety. Non-limiting examples of food holding bins are provided in US 2021/0307563, entitled "Capacitive Touch Universal Holding Bin", US 10,852,002, entitled "Multi-zone Food Holding Bin" and US 10,841,981, entitled "Multi-zone Food Holding Bin."

In an exemplary embodiment, graphical displays 16 may be located and/or orientated within the kitchen 10 for the display of food order information, and/or information regarding the status of the pan 14, and/or the food held within pans 14. The kitchen 10 includes a cooking station 18, for example where protein such as hamburger patties or chicken breasts are cooked before the cooked food items are placed in a pan 14. It will also be recognized that any of a number of food cooking apparatuses, including, but not limited to grills, griddles, broilers, fryers, steamers, ovens, or toasters may be used in the place, in addition to, or in combination to prepare food items for consumption. A pan 14 typically receives cooked food items of a single food item type (e.g. 1:10 hamburger patty, 1:4 hamburger patty, chicken breast, chicken nuggets, etc.) For inventory management purposes, each food item type will typically be prepared in a batch of a predefined numeric count. A single pan 14 is filled with a batch of a single food item. A customer order is assembled from one or more previously cooked food items which have been held in one or more pans 14.

The pan 14 may include features as currently known in the industry, for example, having a configuration with an elongated dimension separating two ends and defining a food receiving area 34 of the pan 14. The pan 14 may have a handle 24 extending away from one or both of the ends. The handle 24 is gripped by a user to facilitate transport of the pan, for example from the cooking station 18 to the holding bin 12. As will be recognized, holding bins 12 may be open on one side or to two sides. A pan 14 with two handles 24 facilitates use by food service workers positioned at opposite sides of a holding bin 12 open to two sides.

Customers are satisfied when food orders are delivered for consumption with quality and consistency. When food items are pre-cooked in anticipation of customer orders, the environment about the food items and the length of time between food preparation and delivery to the customer are important factors for achieving food quality and consistency. Tracking the elapsed time and environmental conditions between food cooking and delivery to the customer helps to ensure the aforementioned quality and consistency, but also food safety to limit or inhibit bacterial growth on cooked food. Operational efficiency and throughput of the kitchen also requires accurate tracking or estimation of inventory of cooked food items to anticipate when more food items should be cooked. Such inventory management seeks to minimize customer wait time, food holding time after food items are cooked, and waste of unused food items.

Current processes rely upon multiple human-machine interactions to input tracking information into a device, for example a holding bin. For example, upon filling a pan with a batch of cooked food items, the worker positions the pan within the holding bin, selects an identification of the food item and starts a timer. The holding bin operates to achieve a "recipe" of a holding conditions for the cooked food item, for example: temperature (e.g. a temperature set point above and/or below the pan), air circulation, humidity, etc., and counts an elapsed time compared to a maximum holding time for that type of food item. This input information may be stored and used locally at the interface for the holding bin. In other examples, this information may be communicated from the holding bin through wired or wireless data connections to a separate computer or computer system operating a kitchen management system software to track food inventory and status throughout the kitchen.

The tracking of food inventory and status throughout the kitchen is important for kitchen operational efficiency, food quality, and customer satisfaction. Therefore, systems and devices for improved information gathering and tracking of food items are proposed herein.

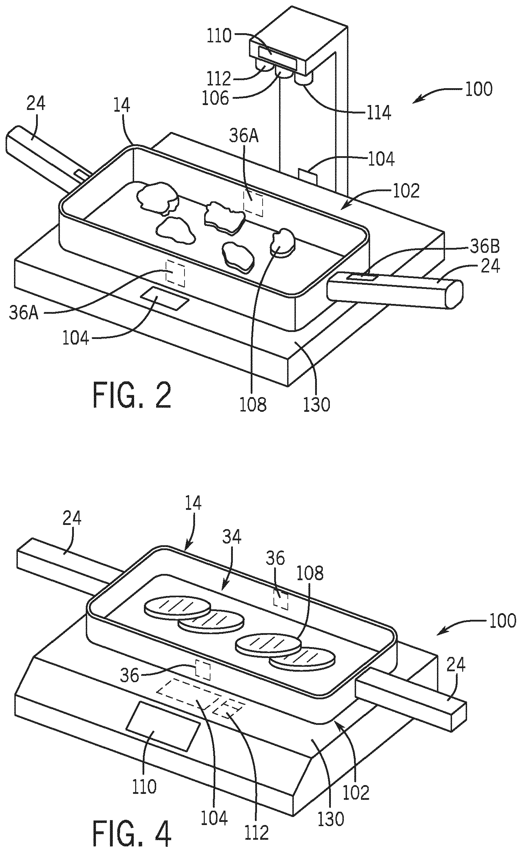

Figures 2 and 4 present examples of an identification station 100. The identification station 100 includes a pan receiving area 102. The identification station 100 is configured to detect the presence of a pan 14 in the pan receiving area 102 and to carry out identification and tracking functions upon such detection. The pan 14 exemplarily includes an identifier 36. The identifier may take the form of an RFID tag (36A in Fig. 2) or a QR code (36B in Fig. 2). Other forms of identifiers or combinations of identifiers may be used, including but not limited to ZigBee, ANT, NFC, or short range wireless devices, while remaining within the scope of the present disclosure. The identification station 100 is configured to read the identifier 36. The identification station 100 may include one or more RFID readers 104, arranged at a position proximate to an expected or probable position of the RFID tag 36A when the pan 14 is positioned in the pan receiving area 102. As described in further detail herein, the identification station 100 may include at least one camera 106. One of the functions of the camera 106 may be to acquire an image of an identifier such as a bar code or QR code 36B for interpretation thereof. The identifier 36 encodes information that identifies an individual pan 14 within the kitchen. The identification information may be an alpha-numeric string or code. The identification station 100 is communicatively connected to a computer operating a kitchen management system (KMS), tracking the overall food inventory and condition within the kitchen. The encoded information in the identifier that identifies an individual pan further enables similar tracking of pan inventory, condition, and use as described in further detail herein. A database may be managed and referenced using the identification of the pan to provide a current status of the pan, for example: clean and ready to receive food, already in use, needs washing, remove from circulation, etc. If a pan is in use, an identification of the food item assigned to the pan may be recorded in the database. In an example, the KMS may perform a condition check against this database using the identification of the pan to confirm that the identified individual pan 14 has not been marked as defective, dirty, damaged or otherwise unavailable for use. In a further example, confirmation may be made that the individual pan has been cleaned according to a cleaning protocol tracked in the same or similar manner as described herein for handling food. The pan status and any relevant warnings by be presented on a user interface 110 of the identification station 100. The user interface 110 may exemplarily include graphical display of a touch-sensitive graphical user interface, capable of visually presenting this status and any warning information.

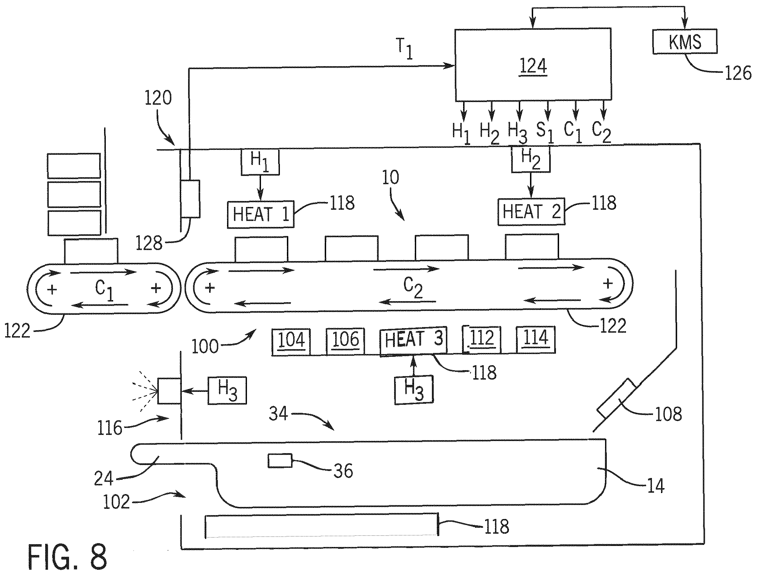

With the individual pan 14 at the identification station 100 identified in the KMS, the identification station operates to determine a type and quantity of food product 108 within the food receiving area 34. Type and or quantity of food product 108 may be communicated to the identification station 100 for example by a manual input by a worker to a user interface 110. In another example, the identification station 100 may be communicatively connected to a cooking device, for example, a broiler (e.g. Fig. 8). The broiler may communicate to the identification station 100 that the broiler has completed cooking of a batch of 10:1 hamburger patties. Therefore, the identification station 100 expects the pan 14 to contain this batch of cooked food.

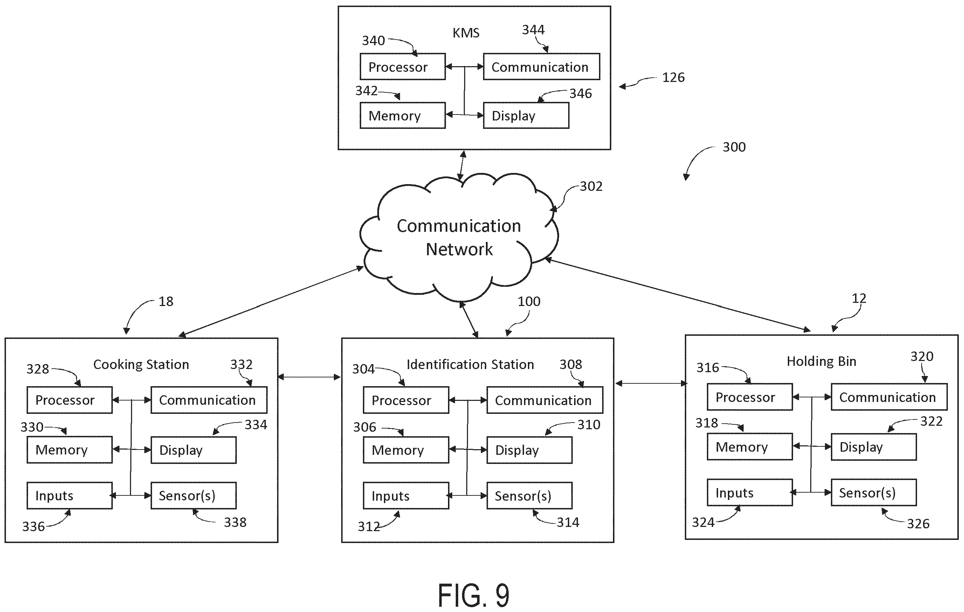

Figure 9 is a system diagram of an example of hardware that can be used to implement an identification system 300, which includes the identification station 100, a cooking station 18, for example a broiler, a holding bin 12, and a kitchen management system 126. These systems may be communicatively connected to one another directly, for example through wired or short-range wireless communication connections, but in other examples one or more of these systems are communicatively connected through a communications network 302. The descriptions provided herein with respect to Fig. 9 similarly apply to hardware and methods of similar components as described elsewhere herein while providing non-limiting examples of the hardware, connection, and operation as described herein.

The identification station 100, exemplarily includes a processor 304, memory 306, one or more communication systems 308, a display 310, one or more inputs 312, and/or one or more sensor(s) 314. The holding bin 12, exemplarily includes a processor 316, memory 318, one or more communications systems 320, a display 322, one or more inputs 324, and/or one or more sensor(s) 326. The cooking station 18, exemplarily includes a processor 328, memory 330, one or more communication systems 332, a display 334, one or more inputs 336, and/or one or more sensor(s) 338. The kitchen management system (KMS) 126, exemplarily includes a processor 340, memory 342, one or more communications systems 344, and/or a display 346.

In examples, these processors may be any suitable hardware processor or combination of processors, such as a central processing unit (CPU), a graphics processing unit (GPUT), an accelerated processing unit (APUT) a microcontroller, an application specific integrated circuit (ASIC, a field-programmable gate array (FPGA), etc. In examples, these displays can include any suitable display devices, such as a computer monitor, a touchscreen, a television, etc. In some embodiments, display can be omitted, for example, where an external display is otherwise communicatively connected to the system (e.g., a touchscreen, a smartphone, a tablet computer, etc.). Inputs can include any suitable input devices and/or sensors that can be used to receive user input, such as a touchscreen, a keyboard, a mouse, a microphone, etc. In some in some examples, the display can be omitted, for example, where an external input device is communicatively connected to the system (e.g., a touchscreen, a smartphone, a tablet computer, etc.). In examples, the communications systems include any suitable hardware, firmware, and/or software for communicating information over communication network 302, any other suitable communication networks, or directly between hardware components of the system 300. Communications systems can include one or more transceivers, one or more communication chips and/or chip sets, etc., that can be used to establish a wired and/or wireless communication link. Communications systems may include hardware, firmware, and/or software that can be used to establish a direct or indirect wired connection and/or a direct or indirect wireless connection, such as a Bluetooth connection, Bluetooth Low Energy connection, a ZigBee connection, a Wi-Fi connection, a cellular connection (e.g., an uplink connection, a downlink connection, or a sidelink connection), an Ethernet connection, etc. Sensors can be any suitable components to make measurements or collect data as described herein, including but not limited to a CMOS sensor, a CCD sensor, any other suitable image sensor or camera, etc. Sensors may also include temperature, weight or other measurements consistent with the disclosure provided herein.

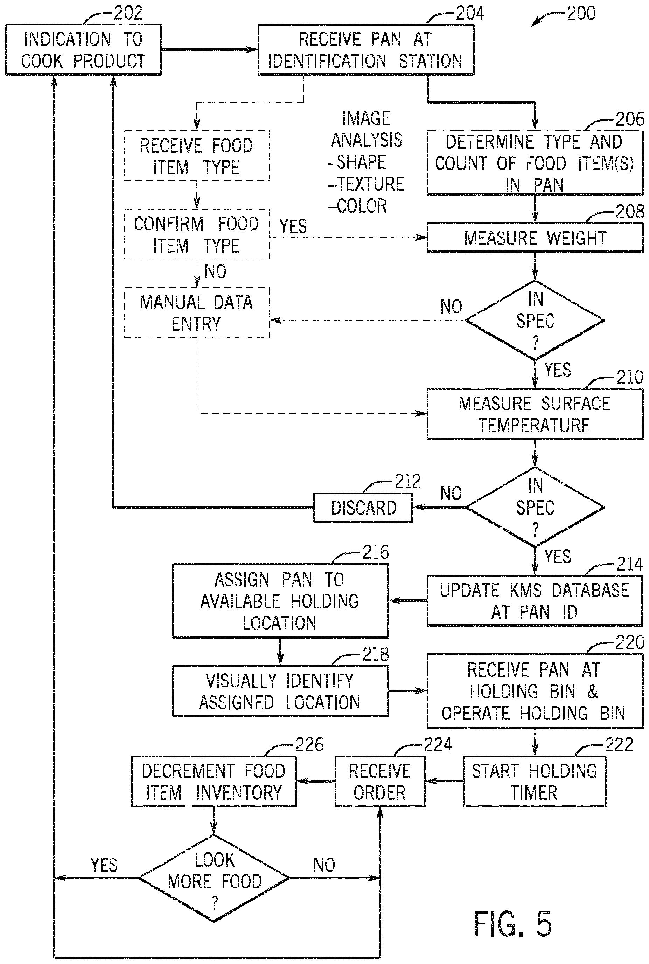

Memory can include any suitable storage device or devices that can be used to store instructions, values, etc., that can be used, for example, by the processor to generate data, to receive data, to analyze data, to present content using the display, or to communicate between components. Memory can include any suitable volatile memory, non-volatile memory, storage, or any suitable combination thereof, including but not limited to random access memory (RAM), read-only memory (ROM), electronically-erasable programmable read-only memory (EEPROM), one or more flash drives, one or more hard disks, one or more solid state drives, one or more optical drives, etc. Memory can have encoded thereon a computer program controlling the operations of one or more of the identification station 100, cooking station 18, holding bin 12, or KMS 126 as described herein. In such examples, the respective processor can execute at least a portion of the computer program to implement at least a portion of the identification system or the methods as described herein, including with respect to Fig. 5. In examples, the KMS 126, including the processor 340 operates to manage and populate a database with pan identification, status, location, elapsed time, etc. and exemplarily stored at the memory 342. It will be recognized that other examples may be implemented without a separate KMS 126 and instead operated locally at an identification station 100, holding bin 12, and/or cooking station 18 as described herein.

In another example, as depicted in Figure 8, the identification station 100 is located or integrated at the outlet 116 of a broiler 120 so that the pan 14 need not be moved between receiving the cooked food and the identification station 100. The broiler 120 exemplarily includes one or more heat sources 118 that direct heat energy into a food product 108 transported through the broiler 120 on one or more conveyors 122. The broiler 120, and the identification station 100 of the broiler 120 is communicatively connected to a controller 124. The controller 124 is in turn communicatively connected to the kitchen management system (KMS) 126. The controller 124 operates to receive inputs from the RFID reader 104, camera 106 and/or radar sensor 112 or IR thermometer 114. The controller 124 uses these inputs in conjunction with an input count or indication of a cooking cycle with a known or expected number of food products 108 (e.g. hamburger patties or chicken breasts). An input count may be determined from an input sensor 128 that provides a signal indicative of when a food product 108 enters the broiler 120. Examples of broilers are provided in US Patent Application Publication Nos. 2023/0066190, entitled "Broiler Discharge Ramp" and 2021/0127898, entitled "Cooking Appliance with Cooked Food Holding Apparatus." While the example of a broiler has been used, it will be recognized that other forms of cooking devices for example as noted above, may be similarly configured or used.

The controller 124 is communicatively connected to or integrated with a computer readable medium (CRM) which is non-transient and upon which is stored computer readable code in the form of computer programs or software configured for execution by the controller 124. It will be recognized that the controller 124 is exemplarily implemented any of a variety of known controller circuits, integrated circuits, microcontrollers, or associated circuitry. The controller 124 may be part of a central processing unit (CPU) which includes integrated memory, although in embodiments the CRM may be a separate component or communicatively connected to the controller 124. The controller 124 accesses software or firmware in the form of computer readable code stored on the CRM as either integrated memory or external memory. The controller 124 executes the computer readable code as an instruction set to carry out the methods and functions as described herein, including the receipt of input, calculations, and outputs as will be described, both herein as well as in the previously noted applications. It will be recognized that while the controller 124 is depicted and described with respect to Fig. 8, that all other embodiments and examples as provided herein may include similar structures and functions.

As previously noted, the identification station includes one or more types of sensors operable to provide data that is used by the identification station 100 to determine the type and quantity of the cooked food in the tray. These sensors include sensors of electromagnetic radiation, for example, an optical sensor like the aforementioned camera 106. Other sensors may include sensors using any of a variety of wavelengths of electromagnetic energy, for example: beam disruption sensors, sensors incorporating coherent or incoherent light, RADAR, LIDAR, or acoustic SONAR-based sensors. In the example depicted in Fig. 2, the system exemplarily includes a radar sensor 112 and an IR thermometer 114 in addition to the camera 106. Additionally, the identification station 100 includes a load cell 130, the load cell is configured to measure a weight of the pan positioned thereon. A processor (e.g. controller 124 as described above, but not depicted) of the identification station 100 uses the data from these sensors either alone or in combination to determine the type of food item in the pan 14. The processor may have communicative access to a library or database of identified food items, expected batch quantities, and identifying characteristics from the data available from the sensors of the identification station 100. Image data from the camera 106 can be analyzed through image processing techniques to identify volume and shape of the food items. Image analysis and recognition may independently determine the type of food product. Data from the radar sensor 112 can provide information regarding density, while data from the load cell provides a weight of the food items in the pan 14. Data from the IR thermometer 114 may exemplarily be used for determination of food type if differences of cooking/preparation temperatures exist between food types. As explained in further detail herein, the temperature data may also be used for quality monitoring and control.

Standardized size of food items in the kitchen setting permits a further determination of the number of food items in the pan once the food item type is determined. The food item count can be determined through image processing techniques on the image data identifying a number of full or partial food items in the image data while extrapolating a total number from a determined volume. For example, based upon optical/RADAR/LIDAR/SONAR data, full or partial shapes of the food items in the pan may be determined through pattern matching and comparison to modeled food items. Additionally, a volume of all of the food items in the pan may be determined from the height and area of the food items in the data. This volume can be correlated to an expected volume based upon the expected food item and count. Mass/weight determinations can be similarly correlated to food item and count. Combinations of these determinations can be used to refine or verify the determinations.

The combinations of multiple sensor inputs or information received, for example, from a cooking device by the identification station 100 can narrow and refine the food item determination and count described above. For example, communication from cooking devices to the identification station may indicate that 4:1 hamburger patties and chicken nuggets have been recently cooked, but not yet allocated to an individual pan in the KMS. With this information, the identification station 100 may narrow the analysis of the food items in the pan to determining if the pan contains the expected hamburger patties or the expected chicken nuggets to the exclusion of other items which may be defined in the food item database. In another example, the RFID tag is first associated to a food item type, then the pan filled with a batch of that food item. The analysis by the identification station is then to verify that the pan has been filled with the intended food product. The station uses this information to check against any information available directly from the cooking station and any manually entered information to check for errors in data or any potential food safety issues (e.g. dirty pans, cross-contamination, etc.). Any errors result in notification and/or prompt for corrective input through the user interface 110.

With identification of the individual pan, and the assignment of the determined food product type to the individual pan, the identification station and/or the KMS, in communication with the holding bin 12, can identify the currently available pan locations in the compartments 15 of the holding bins 12 and assign an optimized available location to the pan. Currently available systems may either pre-designate pan locations for particular types of food or may be configured to receive a pan with any type of food, allowing user specification of the food once the pan is placed. However, rigid designation of pan locations may be inflexible to changes in use or demand, while ad-hoc worker determination of pan locations within a holding bin is susceptible to input errors and sub-optimal pan location. Because different food items require different holding environments, generally pans of like food items are suited to be positioned together. Large differences between holding environment requirements may make certain food items incompatible to be held in adjacent locations. Relative humidity and air flow are other considerations with some foods having an optimal holding condition of a moist environment, while other foods have an optimal holding condition in a dryer environment. Temperature or environmental gradients within holding bins may favor some locations for certain food items compared to others. While individual temperature controls of heat sources in holding bin may accommodate for temperature gradients, humidity and air flow may be more subject to existing gradients. The KMS may be programmed with these placement rules and requirements and evaluate the identified available holding bin locations for an optimized pan placement. In such examples, humidity and airflow requirements may be prioritized over temperature gradient requirements. This assignment is communicated to the holding bin 12. The holding bin 12 may then operate to provide a visual indication of the assigned location, for example with illumination of a visual indicator 20 at the assigned pan location. In such examples, holding pan location assignment may be an optimization problem considering placement of like foods together, temperature, humidity, and airflow requirements, and the optimal ranges of these considerations.

The user transports the pan to a holding bin and inserts it. The holding bin reads the identification of the pan by RFID, QR code, or similar method. The identification of the pan is checked against the database to ensure contents are known and match the position in which the pan is inserted. If the pan contents do not match the settings of the position in which the pan is inserted, an audible and/or visual alarm may be triggered. If the temperature settings in the position are suitable for the pan, the position label may optionally be changed to match the pan contents and the position timer be appropriately set. Additional checks may be made on an elapsed time between cooking completion and insertion into the bin as a food safety or quality measure. Upon successful insertion, the timer for the relevant position will automatically start.

As food product is used in the kitchen, pans will be partially or fully removed from the holding bin. Removal of a pan in conjunction with completion of an order using an ingredient from that pan in the kitchen database may result in decrementing an expected count of products in that pan. The expected count of products in the pan may be compared by the controller or the KMS against a threshold inventory number, to trigger a message, alert, or automated cooking of additional products. This message or alert may be displayed on a graphical display of the holding bin or elsewhere in the kitchen.

An additional identification station 100 may be present at a wash station or storage rack. Interaction with the identification station can read the identifier 36 which may be an RFID tag on the pan 14, and the identification station can be programmed to record that the pan associated with the read RFID tag has been removed from active service in the restaurant and automatically return it to a "clean" state in the database.

Figure 5 is a flow chart that depicts an example of a method 200 of tracking food inventory. The example of the method 200 is not limiting on the extent of the disclosed method and more or fewer steps may be performed than those explicitly described herein while remaining within the scope of the present disclosure. That is, particular branches or cycles of the method 200 depicted in Fig. 5 may be performed as individual implementations of the method 200 as described herein. The example of the method 200 may be carried out using devices as described above, but may also be carried out with other apparatus as will be recognized from the present disclosure. The method 200 begins at 202 with an indication to cook more of a particular food product. This indication may be manually entered by a worker, or may be initiated by the KMS determining that more of the food product is needed to meet anticipated demand within the holding time for the cooked food product. A batch of cooked food is prepared with a cooking device, for example, a broiler, griddle, deep fryer, oven, or toaster and the prepared food items are placed in a pan. The pan containing the cooked food items is received at an identification station at 204. Upon receiving the pan at the identification station, an identification device, for example an RFID or a bar code, is read both to confirm placement of a pan at the identification station and to identify the pan received at the identification station. With reference to the identification of that pan, a suitability of the pan in any or all of: assignment (e.g. not already assigned in the system), condition (e.g. good, broken, or otherwise defective), or status (e.g. dirty, clean, or in use) for use with a batch of food is determined. The identification station may be integrated with the cooking device, a holding bin, or may be a station separate from either of those devices.

At 206 the type and count of the food in the pan is identified. A record of the identification is made in association with the identified pan in the KMS. As described above, this determination may be made by analysis of data acquired from one or more sensors of the identification station, for example, camera, radar, weight. In the case of the use of image data, the color, texture, shape, and/or volume may be determined and referenced against a product identification database that contains these empirical definitions of each food item for the measurands of the sensors of the identification station. In an alternative operation, the identification station is provided with the type of food expected in the pan. Similar analysis of the image data for example of color, texture, and shape of the food in the image data is performed to confirm or verify that the pan is filled with the expected food. In such example, a record of the confirmation is made in association with the pan identification within the KMS.

With the food in the pan identified, at 208 and 210, the food in the pan is analyzed against predetermined specifications for the identified food. First, at 208, the weight of the food in the pan is evaluated. The weight of the food may help to confirm that the food has been properly cooked (e.g. with fats properly rendered) or that the batch of food in the pan has the expected number of food items. A record of the weight is made at the KMS in association with the identified pan.

At 210, the surface temperature of the food in the pan is measured. This surface temperature is compared to minimum temperature requirements for safe handling and holding of the food product. In current available systems, while the temperature of the cooking environment may be controlled and the temperature of the holding environment may be controlled. In current kitchen settings there is often no record of the temperature or environment about the pan of cooked food between the cooking environment and the holding environment. A temperature measurement of the food product between these two controlled environments creates a record of the food product temperature before it is held in the holding bin, and can also ensure that the food temperature is not below specification temperature before being placed in the holding bin. Too low of temperature may also be an indication that the food has not been thoroughly cooked. In a still further example, a known temperature of the input food product may be used to refine the temperature control of the holding environment created by the holding bin. A measurement of a food item temperature at a low end of an acceptable temperature range may induce the holding bin to subsequently operate with an increased heat output and/or circulation to help to ensure that the food product remains within the acceptable temperature range. If food is out of specification, then the identification station creates a visual indication at 212 to discard the food.

If it has not been done so already, with the food in the pan identified, quantified, and confirmed to be in specification, the KMS database is updated at 214 to associate the specific identified pan, the food type in the pan, the count of the food items in the pan, and confirmation of the food in specification. At 216 the pan is assigned to an available location within the holding bin and this assignment is communicated to the holding bin. A food product database referenced by a KMS system may provide rules or conditions for optimal holding of that food product and optimal food product neighbors within a holding bin. The KMS in in communication with the holding bin and is thus informed of the available locations for pans and the food and associated holding environment conditions created by the holding bin at the already assigned locations. Based upon this information, the KMS assigns an optimal available location for the pan and communicates this location to the holding bin. A previously noted, such locations may prioritize clustering the same food item, ordering food items by expiration time, target temperature ranges and temperature gradients within the holding bin, and food item humidity and/or air circulation setpoints.

At 218, the holding bin provides a visual indication of the assigned pan location, visually marking the location in which the holding bin receives the pan from the worker. Upon receipt of the pan in the assigned location, the holding bin at 220 updates to the food product type within the assigned pan and operates to achieve the environmental conditions of the holding recipe. The holding bin also operates at 222 to start an associated timer representative of the maximum holding time for the food item in the environmental conditions provided by the holding bin.

As the restaurant receives customer orders, those orders are received into the KMS system at 224. A food item is decremented from the inventory count of cooked food items at 226. A determination is made at 228 based upon the current time and inventory, stored expected inventory, lead time, and usage rates if more food items should be cooked. If additional food should be cooked, then the indication at 202 is provided to initiate the process again.

In a still further exemplary embodiment, a restaurant may use a KMS to provide an inventory analysis. This inventory analysis may include a known count of received product, e.g. frozen hamburger patties and an end count of remaining product. This may be manually provided to the KMS by worker or manager. The KMS further may provide an order count of the same food product, and a kitchen efficiency may be calculated from the amount of food product used (from the inventory count) for the number of orders fulfilled for that food product. The additional food item count provided at the identification station can provide a refined estimate of the food product that make it to the holding bin. With an intermediate inventory value, the KMS can determine an amount of the food product loss in the handling or cooking of the food product, for example by subtracting the number of food items that are counted in the pans by the identification station from the total food product used from inventory. This may be due to events or conditions of freezer burn, over or under cooking, damaged product in handling or cooking, stolen inventory, etc. With an intermediate inventory value, the KMS can also determine an amount of food product loss between the cooked held food items to the delivered orders. This may occur due to excessive hold times, errors in order assembly, improper employee recordation of the consumed food product, etc. A better understanding of where loss occurs in the food handling process can both lead to targeted improvement efforts and for better inventory management, including instructions to cook additional food product.

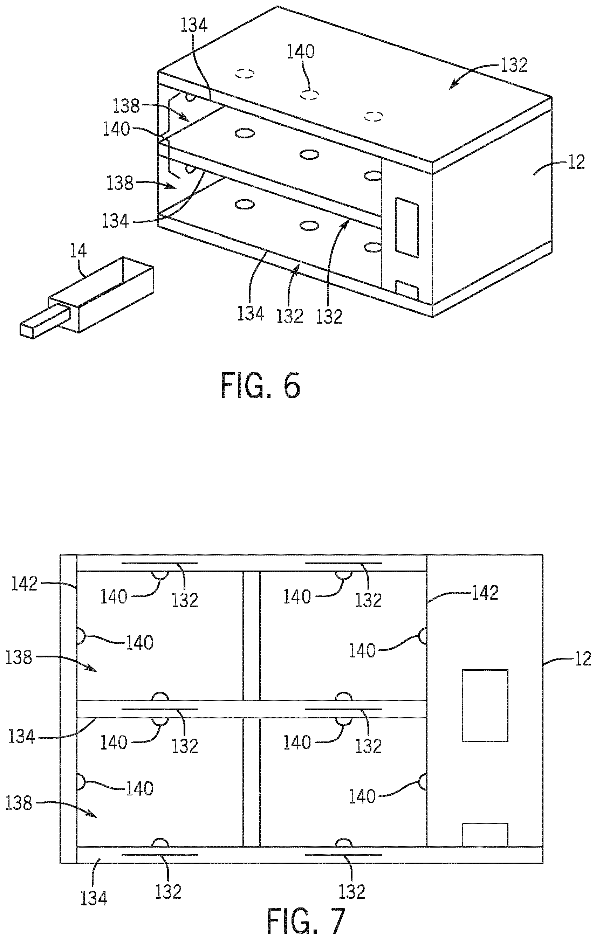

Figures 6 and 7 present examples of the integration of portions of the identification station as described above into a holding bin 12. The holding bin 12 includes heat sources 132, exemplarily resistive wire heaters, within the top and bottom panels 134 of the holding bin to control the temperature of the environment about the food pans 14. The examples of Figs. 6 and 7 include load cells 136 in or about the top and bottom panels 134, for example, in the vicinity of the heat sources 132. The load cells 136 produce an output from which the insertion of a pan 14 into a location on one of the panels 134 within a chamber 138 of the holding bin 12 can be detected. One or more cameras 140 are positioned within each chamber 138 of the holding bin 12, for example within the top and bottom panels 134, for example opposite the load cells, or in side panels 142 of the holding bin 12. Analysis of the image data acquired from the cameras 140 can identify an unique encoding of the pan identification (e.g. read a bar code on the pan) and can identify the type and count of food items in the pan. It will be recognized that the cameras 140 may alternatively be RFID readers or other forms of near-field communication capable of reading a corresponding tag or transmitter within the pan 14. As noted above, this information can be stored in a database at the KMS in association with the pan identification. Once the type of food is determined, the holding bin can operate as described above to produce the holding environment at the pan location as defined by the stored holding environment for the determined food type.

In the above description, certain terms have been used for brevity, clarity, and understanding. No unnecessary limitations are to be inferred therefrom beyond the requirement of the prior art because such terms are used for descriptive purposes and are intended to be broadly construed. The different systems and method steps described herein may be used alone or in combination with other systems and methods. It is to be expected that various equivalents, alternatives, and modifications are possible within the scope of the appended claims.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

This written description uses examples to disclose the invention, including the best mode, and also to enable any person skilled in the art to make and use the invention. The patentable scope of the invention is defined by the claims and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A food holding pan communication system (300) comprising:
a food holding pan (14), the food holding pan comprising a pan identifier (36) and configured to receive food items;
a pan identification station (100), the pan identification station comprising:
a pan receiving area (102);
a pan identifier reader (104); and
at least one sensor (314) directed at the pan receiving area and configured to acquire data regarding a food item received by the food holding pan; and
a processor (304) communicatively connected to the plurality of sensors to receive signals from the at least one sensor, and the processor is configured to determine a type of food item in the food holding pan.

2. The food holding pan communication system of claim 1, wherein the pan identifier is a bar code or an RFID tag.

3. The food holding pan communication system of claim 1 or 2, further comprising a kitchen management system (KMS) (126) communicatively connected to the processor of the pan identification station (100), wherein the KMS comprises a database wherein an identification of the pan from the pan identifier reader is stored in association with the determined type of food item in the food holding pan.

4. The food holding pan communication system of claim 3, further comprising a holding bin (12), wherein the holding bin is communicatively connected to the KMS (126), and the holding bin informs the KMS of a status of each location in each compartment of the food holding bin, wherein the KMS operates to assign a location of the pan to the holding bin and communicate the assigned location to the holding bin.

5. The food holding pan communication system of claim 4, wherein the holding bin comprises at least one visual indicator in association with each location in each compartment of the holding bin, and the holding bin operates a visual indicator of the at least one visual indicator to identify the assigned location.

6. The food holding pan communication system of claim 5, wherein the holding bin comprises the pan identification station.

7. The food holding pan communication system of claim 6, further comprising a broiler (18), wherein the pan is configured to be moved from the broiler to the pan identification station and from the pan identification station to the holding bin; and
optionally, the broiler comprises the pan identification station.

8. The food holding pan communication system of any of claims 1-7, wherein the processor of the identification station analyzes the data of the at least one sensor to determine the type of food items in the holding pan; and
optionally, the processor of the identification station analyzes the data of the at least one sensor to determine a count of the food items in the holding pan.

9. The food holding pan communication system of any of claims 1-8, wherein the at least one sensor comprises a camera (106).

10. The food holding pan communication system of claim 9, wherein the at least one sensor is a plurality of sensors and further comprises at least one of a load cell (130), a radar (112), and an infra-red thermometer (114).

11. The food holding pan communication system of claim 9, wherein the processor analyzes image data from the camera to determine a type of the food items in the holding pan, the processor accesses a database of food item specifications for the type of food items in the holding pan.

12. The food holding pan communication system of claim 11, further comprising a load cell (130), wherein a measured weight of the food items in the holding pan are weighed an compared against a weight specification for the type of food items in the holding pan.

13. The food holding pan communication system of claim 11, further comprising an infra-red thermometer (114) configured to measure a surface temperature of the food items, wherein the processor compares the surface temperature to a surface temperature specification for the type of food item in the holding pan.

14. The food holding pan communication system of claim 13, wherein the measured surface temperature is stored in a database in association with the pan identification; and optionally: wherein if the measured surface temperature is outside of the surface temperature specification, a visual indication to reject the pan of food items is produced; and wherein if the measured surface temperature is inside of the surface temperature specification, a location in holding bin is assigned to the holding pan.

15. A method of food holding pan communication using any of the food holding pan communication systems of claims 1-14, the method comprising:
receiving the pan with food items at the pan identification station;
reading an encoded identification from the pan;
acquire sensor data from one or more sensors directed at the pan;
identifying the food items in the pan at least partially based upon the sensor data;
counting the food items in the pan at least partially based upon the sensor data;
assigning a location in a holding bin to the pan; and
automatedly operating the holding bin to control for a predetermined environment at the location in the holding bin assigned to the pan; and optionally measuring a surface temperature of the food items in the pan;
comparing the surface temperature against an acceptable temperature range; and
producing an alarm if the surface temperature is below the acceptable temperature range.
